# NEUE EUROPÄISCHE PATENTSCHRIFT

(11) **EP 0 760 199 B2**
(45) Veröffentlichungstag und Bekanntmachung des Hinweises auf die Entscheidung über den Einspruch: **30.01.2002**
(45) Hinweis auf die Patenterteilung: 17.03.1999
(21) Anmeldenummer: 96112254.6
(22) Anmeldetag: 30.07.1996
(51) Int. Cl.: A01C 5/06, A01C 19/00

(54) **Pneumatische Drillmaschine**
Pneumatic seed drill
Semoir pneumatique

(30) Priorität: 29.08.1995 DE 19531644; 29.08.1995 DE 19531646
(43) Veröffentlichungstag der Anmeldung: 05.03.1997
(73) Patentinhaber: Amazonen-Werke H. Dreyer GmbH & Co. KG, 49205 Hasbergen (DE)
(72) Erfinder: Wiemeyer, Benno, 49504 Lotte-Halen (DE)

(56) Entgegenhaltungen:
- EP-A- 0 282 812
- EP-B- 0 262 285
- DE-A- 3 513 739
- DE-A- 4 235 524
- DE-A- 4 238 019
- "Hydrauliek in de landbouwmechanisatie", Ir.B.C.P.M. van Straelen, 18.th Edition, May 1990
- "Dominator", brochure by CLAAS, 1986

## Beschreibung

Die Erfindung betrifft eine pneumatische Drillmaschine gemäß des Oberbegriffes des Patentanspruches 1.

Derartige pneumatische Drillmaschinen sind in der Praxis bekannt (siehe DE-A-4238019). Diese pneumatischen Drillmaschinen weisen eine Hydraulikanlage mit einer Hydraulikpumpe und einem Hydraulikmotor zum Antrieb eines Gebläses und weiterer hydraulisch antreibbarer und betätigbarer Elemente auf.

Die bei dieser Hydraulikanlage auftretenden Wärmeverluste sind relativ hoch, da die Hydraulikanlage einen Mengenteiler aufweist, der die erforderliche Mengen für den das Gebläse antreibenden Hydraulikmotor und die anderen hydraulisch betätigbaren Elemente aufteilt.

Eine weitere Drillmaschine ist beispielsweise durch die DE-OS 42 35 524 bekannt. Bei dieser Drillmaschine ist hinter den Säscharen ein über einen Ölmotor antreibbarer Rotorstriegel angeordnet.

Nun hat es sich in praktischen Einsätzen gezeigt, daß vor allem bei Einsätzen auf Feldern, auf denen sich eine relativ große Strohmenge befindet, es zu Verstopfungen des Rotorstriegels kommen kann.

Der Erfindung liegt die Aufgabe zugrunde, hier auf einfache Weise Abhilfe zu schaffen.

Diese Aufgabe wird erfindungsgemäß dadurch gelöst, daß die Arbeit des Rotorstriegels während des Einsatzes zeitweise unterbrechbar ist, wobei eine Umschalteinrichtung vorgesehen ist, mittels welcher der Rotorstriegel kurzzeitig in entgegengesetzter Richtung antreibbar ist. Hierdurch kann vom Schleppersitz aus in einfacher Weise eine Verstopfungsanfälligkeit des Rotorstriegels vermieden werden.

In Folge dieser Maßnahme läßt sich in einfacher Weise eine Verstopfung beseitigen oder eine sich anbahnende Verstopfung vermeiden. Hierzu ist es lediglich erforderlich, daß kurzzeitig von Hand die von Hand zu betätigende Umschalttaste der Umschalteinrichtung betätigt wird.

Desweiteren ist vorgesehen, daß der Rotorstriegel mittels einer Aushubeinrichtung in seine Arbeitsposition absenkbar und in zumindest eine obere Position anhebbar ist. In Folge dieser Maßnahme kann zusätzlich in einfacher Weise eine Verstopfung des Rotorstriegels bzw. eine sich anbahnende Verstopfung des Rotorstriegels vermieden werden. Die Aushubeinrichtung ist über eine Betätigungseinrichtung zum kurzzeitigen Anheben und anschließendem Absenken betätigbar.

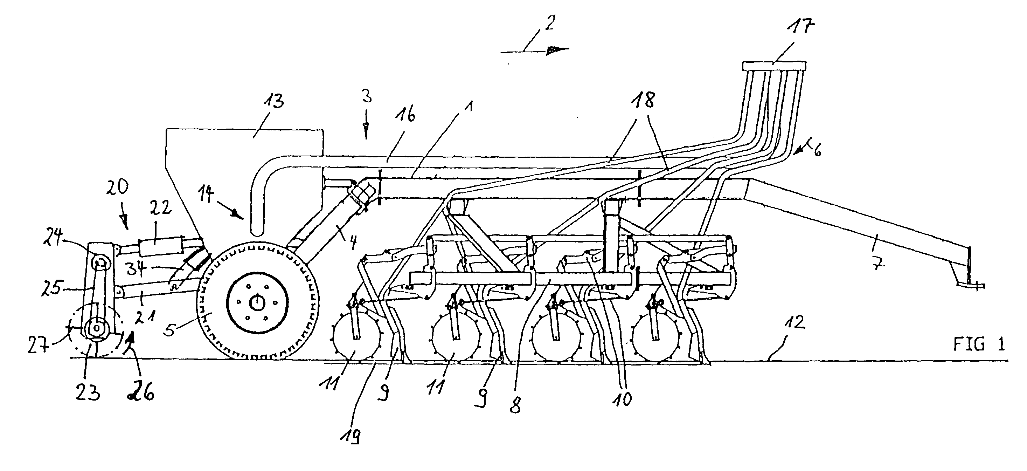

Weitere Einzelheiten der Erfindung sind den übrigen Unteransprüchen, der Beispielsbeschreibung und den Zeichnungen zu entnehmen. Hierbei zeigen
- Fig.1: eine pneumatische Drillmaschine in Seitenansicht und in Prinzipdarstellung,
- Fig.2: den Hydraulikschaltplan für die Tandempumpe der Hydraulikanlage der Drillmaschine gemäß Fig. 1.
- Fig.3: einen weiteren Hydraulikschaltplan für die Tandempumpe der Hydraulikanlage der Drillmaschine gemäß Fig.1 und
- Fig.4: einen weiteren Hydraulikschaltplan für eine andere Hydraulikanlage der Drillmaschine gemäß Fig.1.

Die pneumatische Drillmaschine ist als Direktsämaschine zum Einsatz von Saatgut in zur Saat unvorbereiteten Böden vorgesehen. Die Direktsämaschine weist den Grundrahmen 1 auf. An dem Grundrahmen 1 sind in Fahrtrichtung 2 gesehen auf der Rückseite 3 im Abstand zueinander über die beiden Tragarme 4 die Laufräder 5 angeordnet. Auf der Vorderseite 6 des Grundrahmens 1 befindet sich die Zugdeichsel 7, die an die Anhängekupplung eines Ackerschleppers oder über eine spezielle Kuppeleinrichtung an die Unterlenker des Dreipunktkrafthebers eines Schleppers anzuschließen ist. Hierdurch wird ein Teil des Gewichtes der Sämaschine auf die Hinterräder des Ackerschleppers übertragen. An dem Grundrahmen 1 sind Scharhalterahmen 8 vorgesehen, an die als Meißelsäschare 9 ausgebildete Säschare über Parallelogrammlenker 10 in Höhenrichtung bewegbar angeordnet sind. Die Säschare 9 sind in vier Querreihen hintereinander auf Lücke und versetzt zueinander angeordnet. Hinter den Säscharen 9 sind Tiefenführungs-und Druckrollen 11 angeordnet, die die Eindringtiefe der Säschare 9 in den Boden 12 bestimmen.

Auf der Rückseite 3 der Direktsämaschine ist oberhalb der Laufräder 5 der Dosiertank 13 der pneumatischen Drillmaschine angeordnet. Der Dosiertank 13 weist ein bekanntes und daher nicht näher dargestelltes Dosiersystem auf. Dieses Dosiersystem ist an einer pneumatischen Fördereinrichtung 14, die ein Gebläse 15 aufweist, angeschlossen. Die Transportleitung 16 der Fördereinrichtung 14 führt zu dem Verteilerkopf 17, der auf der Vorderseite 6 vor dem Grundrahmen 1 angeordnet ist. Von diesem Verteilerkopf 17 führt zu jedem Säschar 9 eine Saatleitung 18, so daß das Saatgut in den von den Säscharen 9 in den Boden 12 gerissenen Saatfurchen 19 abgelegt werden kann. Auf der Rückseite 3 der Sämaschine ist an den Tragarmen 4 über die Dreipunktkupplung 20, die die beiden Unterlenker 21 und den längeneinstellbaren Oberlenker 22 aufweist, der in drei Abschnitten aufgeteilte Rotorstriegel 23 angeordnet. Jeder Abschnitt des Rotorstriegels 23 wird von einem Ölmotor 24,24',24" über den Kettentrieb 25 in Pfeilrichtung 26 rotierend angetrieben. Der Rotorstriegel 23 weist Zinken 27 auf.

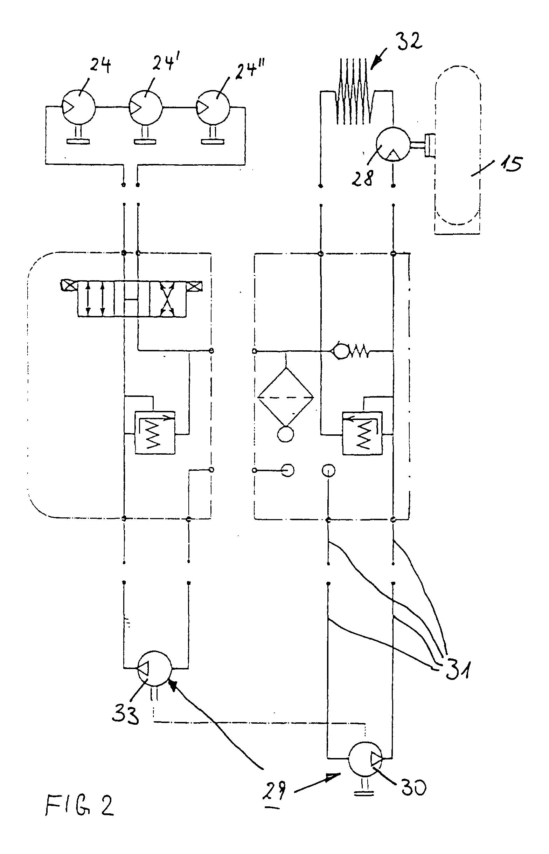

Wie in Fig.2 dargestellt, werden die dem Rotorstriegel 23 und dem Gebläse 15 zugeordneten Ölmotore 24,24',24" und 28 von der Pumpe 29, die auf die Schlepperzapfwelle aufgesteckt und als Tandempumpe ausgebildet ist, angetrieben. Die Hydraulikpumpe 30 der Tandempumpe 29 ist über die Leitungen 31 mit dem Hydraulikmotor 28 des Gebläses 15 verbunden. In der Hydraulikleitung 31, die von dem Hydraulikmotor 28 zurück in den Öltank 31 führt, ist ein Ölkühler 32 angeordnet.

Die andere Hydraulikpumpe 33 der Tandempumpe 29 ist über die Leitungen 34 mit den Hydraulikmotoren 24,24',24" des Rotorstriegels 23 verbunden.

Weiterhin ist es möglich, weitere hydraulische Elemente an die weitere Hydraulikpumpe 33 der Tandempumpe 29 anzuschließen, um hierdurch den der Dreipunktkupplung 20 des Rotorstriegels 23 zugeordneten Hydraulikzylinder 34' zu betätigen, um den RotorStriegel 23 anzuheben. Auch kann an diesen weiteren Hydraulikmotor 33 der Tandempumpe 29 die den Säscharen 9 zu deren Ausheben zugeordneten, jedoch nicht dargestellten Hydraulikzylinder angeschlossen sein.

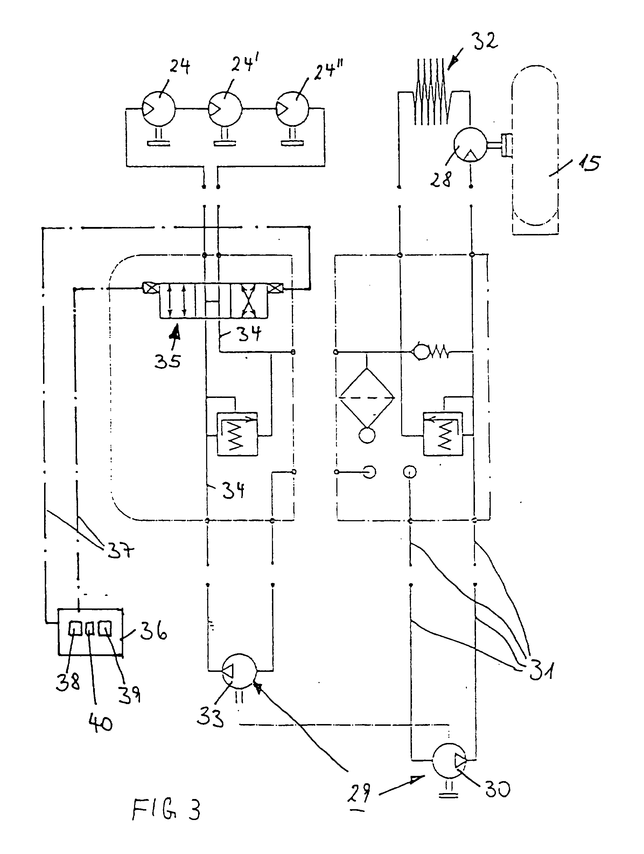

Wie in Fig.3 dargestellt, ist im den von der Hydraulikpumpe 33 zu den Ölmotoren 24,24' und 24", die die einzelnen Abschnitte des Rotorstriegels 23 antreiben, und zu den Öltank zurückführenden Leitungen 34, ein als Wegeventil ausgebildetes Umschaltventil 35 angeordnet. Das elektrisch betätigbare Umschaltventil 35 ist mit der Umschalteinrichtung 36 über die elektrischen Leitungen 37 verbunden. Durch Betätigen der Taste 38 wird das Ventil 35 umgeschaltet, so daß über die Hydraulikmotoren 24,24' und 24" der Rotorstriegel 23 in Pfeilrichtung 26 angetrieben wird. Falls nun sich vor dem Rotorstriegel 23 zu viel Stroh- und Pflanzenreste oder Steine ansammeln, wird durch kurzzeitiges Betätigen der Umschalttaste 39 der Umschalteinrichtung 36 das Ventil 35 umgeschaltet, so daß der Rotorstriegel 23 entgegengesetzt der Pfeilrichtung 26 rotiert. Nach Loslassen der Umschalttaste 39, d.h., wenn die Verstopfung beseitigt ist, schaltet das Ventil 35 automatisch wieder in die Position um, so daß der Rotorstriegel 23 in Pfeilrichtung 26 angetrieben wird. Durch Betätigen der Taste 40 wird das Ventil 35 in Stopstellung geschaltet, so daß die Ölzufuhr zu den Hydraulikmotoren 24,24' und 24" abgeschaltet wird.

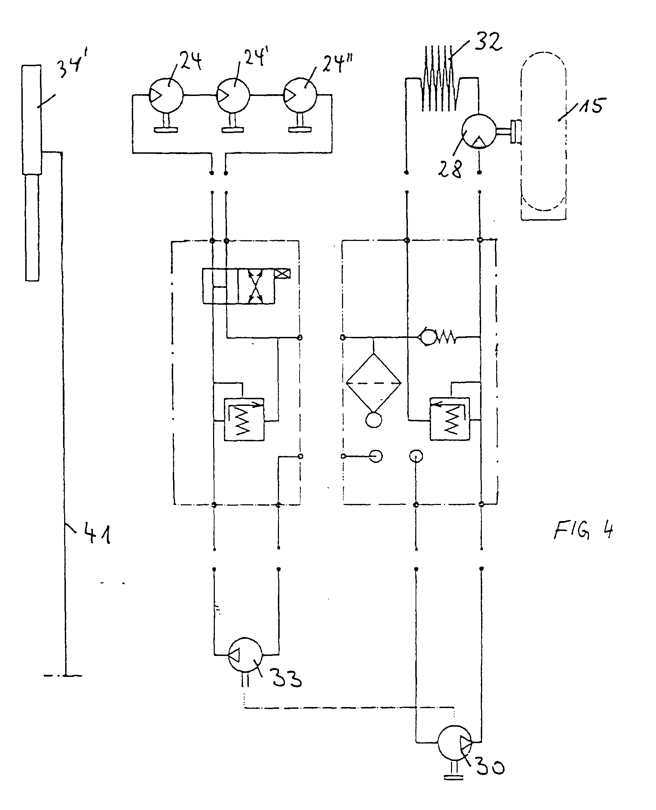

Die Fig.4 zeigt einen anderen Hydraulikschaltplan um die Arbeit des Rotorstriegels 23 während des Einsatzes zeitweise unterbrechen zu können. Hierzu ist in der Dreipunktkupplung 20 der Hydraulikzylinder 34' angeordnet, mittels welchem der Rotorstriegel 23 aus seiner Arbeitsposition angehoben werden kann, so daß die sich vor dem Rotorstriegel 23 angesammelten Stroh- und Pflanzenteile sowie Steine unter dem angehobenen Rotorstriegel 23 hindurch gelangen können. Wenn der Rotorstriegel 23 diese Anhäufungen passiert hat, wird der Rotorstriegel 23 durch Betätigen des Steuergerätes, an dem der Hydraulikzylinder 34' über eine Leitung 41 angeschlossen ist, wieder in seine Arbeitsposition abgesenkt. Somit kann also durch kurzzeitiges Betätigen des Steuerventils der Rotorstriegel angehoben und anschließend wieder abgesenkt werden.

## Patentansprüche

1. Drillmaschine zum Ausbringen des Saatgutes im Direktsaatverfahren mit einem Rahmen, Vorratsbehälter, mehrere in Querreihen und auf Lücke zueinander angeordneten Säscharen und zumindest einem hinter den Säscharen angeordneten, um eine quer zur Fahrtrichtung verlaufende Achse über einen Ölmotor rotierend antreibbaren Rotorstriegel, der während der Arbeit vorzugsweise derart antreibbar ist, daß er auf seiner Unterseite in Fahrtrichtung rotiert, **dadurch gekennzeichnet, daß** die Arbeit des Rotorstriegels (23) während des Einsatzes zeitweise unterbrechbar ist, wobei eine Umschalteinrichtung (36) vorgesehen ist, mittels welcher der Rotorstriegel (23) kurzzeitig in entgegengesetzter Richtung antreibbar ist.

2. Drillmaschine nach Anspruch 1, **dadurch gekennzeichnet, daß** die Umschalteinrichtung (36) eine von Hand zu betätigende Umschalttaste (39) aufweist.

3. Drillmaschine nach Anspruch 1, **dadurch gekennzeichnet, daß** der Rotorstriegel (23) mittels einer Aushubeinrichtung (20) in seine Arbeitsposition absenkbar und in zumindest eine obere Position anhebbar ist.

4. Drillmaschine nach Anspruch 3, **dadurch gekennzeichnet, daß** die Aushubeinrichtung (20) über eine Betätigungseinrichtung zum kurzzeitigen Anheben und anschließendem Absenken betätigbar ist.

## Claims

1. Seed drill for distributing seeds in a direct sowing method having a frame, hoppers, a plurality of sowing coulters disposed in transverse rows with gaps therebetween, and at least one rotary comb, disposed behind the sowing coulters and drivable so as to rotate about an axis extending transversely relative to the direction of travel via an oil engine, said rotary comb preferably being drivable during the work in such a manner that it rotates in the direction of travel on its underside, **characterised in that** the work of the rotary comb (23) can be temporarily interrupted during use, that a switchover means (36) is provided, by means of which the rotary comb (23) is drivable for a short time in the opposite direction.

2. Seed drill according to claim 1, **characterised in that** the switchover means (36) has a manually actuatable switchover button (39).

3. Seed drill according to claim 1, **characterised in that** the rotary comb (23) is lowerable into its working position and raisable into at least one upper position by means of a lifting means (20).

4. Seed drill according to claim 3, **characterised in that** the lifting means (20) is actuatable via an actuating means for raising for a short time and for subsequent lowering.

## Revendications

1. Semoir pour distribuer des semences selon le procédé d'ensemencement direct, comprenant un châssis, un réservoir d'alimentation avec plusieurs socs de semoir répartis dans des rangées transversales et de façon décalée, et au moins un racleur à rotor entraîné derrière les socs de semoir, tournant autour d'un axe transversal à la direction de déplacement et entraîné, par un moteur hydraulique, ce rotor étant entraîné pendant le fonctionnement, de préférence pour que son côté inférieur tourne dans la direction de déplacement,
**caractérisé en ce que**
le fonctionnement du rotor racleur (23) peut être interrompu périodiquement pendant le travail,
une installation de commutation (36) qui permet d'entraîner le rotor racleur (23) brièvement en sens opposé.

2. Semoir selon la revendication 1,
**caractérisé en ce que**
l'installation de commutation (36) est une touche de commutation (39) commandée à la main.

3. Semoir selon la revendication 1,
**caractérisé en ce que**
le rotor racleur (23) peut être abaissé par une installation de levage (20) en position de travail et être soulevé au moins dans une position haute.

4. Semoir selon la revendication 3,
**caractérisé en ce que**
l'installation de soulèvement (20) est actionnée par l'installation d'actionnement pour assurer un soulèvement bref suivi d'un abaissement.
